# EUROPÄISCHE PATENTSCHRIFT

(11) **EP 3 541 553 B1**
(45) Veröffentlichungstag und Bekanntmachung des Hinweises auf die Patenterteilung: **09.12.2020**
(21) Anmeldenummer: 18700464.3
(22) Anmeldetag: 04.01.2018
(51) Int. Cl.: B23B 29/02, B23B 29/034

(54) **BEARBEITUNGSSYSTEM**
MACHINING SYSTEM
SYSTÈME D'USINAGE

(30) Priorität: 30.01.2017 DE 102017201404
(43) Veröffentlichungstag der Anmeldung: 25.09.2019
(73) Patentinhaber: Siemens Aktiengesellschaft, 80333 München (DE)
(72) Erfinder: RYNKOWSKI, Patrick, 47475 Kamp Lintfort (DE); SELLMANN, Stefan, 45355 Essen (DE); TOBISCH, Roger, 35789 Weilmünster (DE); VISAJTAEV, Marat, 46236 Bottrop (DE); VOGT, Felix, 46119 Oberhausen (DE)
(86) Internationale Anmeldenummer: PCT/EP2018/050203
(87) Internationale Veröffentlichungsnummer: WO 2018/137909

(56) Entgegenhaltungen:
- EP-A2- 1 671 724
- US-A- 5 030 041
- US-A1- 2005 204 879
- US-A1- 2008 060 490
- US-B1- 6 447 220

## Beschreibung

Die vorliegende Erfindung betrifft ein mobiles Bearbeitungssystem zur spanenden Drehbearbeitung von Innenflächen hohlzylindrischer Bauteile, insbesondere zur Bearbeitung von Ventilsitzen.

Bei der Wartung von Kraftwerken ist es häufig erforderlich, die Ventilsitze vorhandener Ventile zwecks Instandhaltung spanend zu bearbeiten. Zu diesem Zweck werden mobile Bearbeitungssysteme der eingangs genannten Art eingesetzt. Die hier in Rede stehenden mobilen Bearbeitungssysteme zeichnen sich zum einen durch einen modularen Aufbau aus, der zu Transportzwecken in seine einzelnen Module zerlegbar ist und kein stationäres Maschinenbett benötigt, und zum anderen dadurch, dass während der Bearbeitung allein das Werkzeug, nicht aber das zu bearbeitende Bauteil bewegt wird. Entsprechend kann die spanende Bearbeitung eines Ventils ohne weiteres direkt im Kraftwerk erfolgen, was zur Verringerung von Stillstandzeiten und Kosten sehr wünschenswert ist.

Für die Drehbearbeitung benötigt das Bearbeitungssystem zumindest eine C-Achse, um die das Werkzeug drehend angetrieben wird, eine Z-Achse, die sich im bestimmungsgemäß ausgerichteten Zustand des Bearbeitungssystems parallel zur Längsachse des zu bearbeitenden Bauteils erstreckt, und eine X-Achse, die sich senkrecht zur Z-Achse erstreckt und über welche die Werkzeugzustellung erfolgt. Ein Bearbeitungssystem gemäß dem Oberbegriff des Anspruchs 1 ist aus US 6 447 220 B1 bekannt.

Ausgehend von diesem Stand der Technik ist es eine Aufgabe der vorliegenden Erfindung, ein mobiles Bearbeitungssystem der eingangs genannten Art zu schaffen, bei dem die Drehbewegung des Werkzeugs um die C-Achse ebenso wie die linearen Bewegungen des Werkzeugs entlang der Z-Achse und der X-Achse in einfacher und kostengünstiger Weise realisiert sind.

Zur Lösung dieser Aufgabe schafft die vorliegende Erfindung ein mobiles Bearbeitungssystem der eingangs genannten Art, umfassend ein Basisteil, ein hohl ausgebildetes Rotationsteil, das sich durch das Basisteil erstreckt, an diesem drehbar um eine C-Achse des Bearbeitungssystems gelagert ist und stirnseitig einen ersten Flanschbereich definiert, eine Führungsstange, die an einem ihrer freien Enden einen zweiten Flanschbereich aufweist, der mit der ersten Flanschbereich des Rotationsteils drehfest verbunden ist, und die eine sich parallel zur C-Achse erstreckende Z-Achse des Bearbeitungssystems definiert, einen ersten Motor, der drehfest mit dem Basisteil verbunden ist und die Führungsstange über einen ersten Antriebsstrang drehend um die C-Achse antreibt, einen Support, der an der Führungsstange in Richtung der Z-Achse vor und zurück bewegbar gehalten ist, einen zweiten Motor, der drehfest mit dem Rotationsteil verbunden ist, über einen Schleifring mit Energie versorgt wird und den Support über einen zweiten Antriebsstrang antreibt, einen Werkzeughalter, der an dem Support in Richtung einer sich senkrecht zur Z-Achse erstreckenden X-Achse des Bearbeitungssystems bewegbar gehalten ist, einen dritten Motor, der drehfest mit dem Rotationsteil verbunden ist, über einen oder den Schleifring mit Energie versorgt wird und den Werkzeughalter über einen zweiten Antriebsstrang antreibt, eine Außenspanneinrichtung, die drehfest mit dem Basisteil verbunden und dazu ausgelegt ist, das Basisteil mittig an einer Stirnseite eines zu bearbeitenden Bauteils zu befestigen, und eine Innenspanneinrichtung, die an der Führungsstange gelagert und dazu ausgelegt ist, das Bearbeitungssystem an einer Innfläche des zu bearbeitenden Bauteils abzustützen.

Dank der Tatsache, dass sich der zweite Motor und der dritte Motor während der spanenden Bearbeitung gemeinsam mit dem Rotationsteil und entsprechend mit der Führungsstange drehen, was letztendlich durch die Verwendung des zumindest einen Schleifrings ermöglicht wird, können der zweite Antriebsstrang und der dritte Antriebsstrang zur Realisierung der Bewegungen des Werkzeughalters entlang der Z- und X-Achse vergleichsweise einfach und kostengünstig ausgeführt werden.

Der erste Antriebsstrang weist bevorzugt ein mit dem ersten Motor verbundenes Getriebe, insbesondere ein Planetengetriebe, eine über das Getriebe angetriebene erste Zahnriemenscheibe und eine mit dem Rotationsteil drehfest verbundene zweite Zahnriemenscheibe auf, die über einen Zahnriemen miteinander verbunden sind. Damit wird die Drehbewegung des Werkzeughalters um die C-Achse in konstruktiv einfacher Weise umgesetzt.

Eine vorteilhafte Ausgestaltung des erfindungsgemäßen Bearbeitungssystems ist dadurch gekennzeichnet, dass der zweite Antriebsstrang zumindest ein Zahnrad aufweist, das drehfest im Endbereich einer sich durch das Rotationsteil erstreckenden, von dem zweiten Motor angetriebenen ersten Zahnradwelle gehalten ist, dass der dritte Antriebsstrang zumindest ein Zahnrad aufweist, das drehfest im Endbereich einer sich durch das Rotationsteil erstreckenden, von dem dritten Motor angetriebenen zweiten Zahnradwelle gehalten ist, dass die beiden Zahnräder in einem zentralen Bereich nahe der C-Achse angeordnet sind und auswärts von dem Rotationsteil vorstehen, wobei ein kürzester Abstand zwischen den Kopfkreisdurchmessern der beiden Zahnräder insbesondere 15mm bis 45mm beträgt, und dass der zweite und der dritte Antriebsstrang jeweils zumindest ein weiteres Zahnrad aufweisen, das drehbar an der Führungsstange innerhalb des zweiten Flanschbereiches angeordnet ist und mit dem zugeordneten, von dem Rotationsteil auswärts vorstehenden Zahnrad kämmt.

Ein erster wesentlicher Vorteil einer solchen Konstruktion besteht darin, dass sich weitere Komponenten des zweiten und dritten Antriebsstrangs einfach an die beiden weiteren, innerhalb des zweiten Flanschbereiches an der Führungsstange gehaltenen Zahnräder anbinden lassen. So kann über das innerhalb des zweiten Flanschbereiches der Führungsstange angeordnete weitere Zahnrad des zweiten Antriebsstrangs beispielsweise eine sich parallel zur C-Achse und entlang der Führungsstange erstreckende Kugelumlaufspindel angetrieben werden, über welche die Bewegung des Supports und damit des Werkzeughalters in Z-Richtung realisiert wird. Das innerhalb des zweiten Flanschbereiches der Führungsstange angeordnete weitere Zahnrad des dritten Antriebsstrangs kann beispielsweise eine sich parallel zur C-Achse erstreckende Antriebsstange mit mehreckigem Querschnitt drehend antreiben, die wiederum einen Zahnriementrieb antreibt, der dann, beispielsweise unter Zwischenschaltung eines Winkelgetriebes, eine oder mehrere an dem Support vorgesehene Kugelumlaufspindeln zum Bewegen des Werkzeughalters in X-Richtung dreht.

Der zweite Antriebsstrang und der dritte Antriebsstrang weisen bevorzugt jeweils ein Getriebe auf, insbesondere ein Planetengetriebe, das zwischen dem jeweiligen Motor und dem zugehörigen, auswärts von dem Rotationsteil vorstehenden Zahnrad angeordnet ist. Dies führt zu einem einfachen und preiswerten sowie platzsparenden Aufbau.

Gemäß einer vorteilhaften Ausgestaltung der vorliegenden Erfindung sind mehrere Führungsstangen unterschiedlichen Durchmessers mit zugeordneten Supports, Werkzeughaltern und Innenspanneinrichtungen vorgesehen, die jeweils einen zweiten Flanschbereich definieren, der zur Befestigung an dem ersten Flanschbereich des Rotationsteils ausgelegt ist. Dank einer solchen Mehrzahl von Führungsstangen, die wahlweise an demselben Rotationsteil befestigbar sind, ist das Bearbeitungssystem an unterschiedliche Bearbeitungsanforderungen flexibel anpassbar. Insbesondere die zuvor beschriebene Anordnung der beiden von dem Rotationsteil auswärts vorstehenden Zahnräder in einem zentralen Bereich nahe der C-Achse ist bei der Verwendung mehrerer Führungsstangen unterschiedlichen Durchmessers dahingehend von Vorteil, dass die Anbindung der führungsstabseitigen Antriebskomponenten des zweiten und dritten Antriebsstrangs einfach über eine geeignete Auswahl und Anordnung der innerhalb des zweiten Flanschbereiches anzuordnenden weiteren Zahnräder erfolgen kann.

Bevorzugt sind das Basisteil, das Rotationsteil und die drei Motoren in einem einzelnen Antriebsmodul zusammengefasst. Insbesondere in Verbindung mit der Bereitstellung mehrerer Führungsstangen unterschiedlichen Durchmessers ist dies dahingehend von Vorteil, dass das einzelne Antriebsmodul für alle Führungsstangen verwendet werden kann.

Weitere Merkmale und Vorteile der vorliegenden Erfindung werden anhand der nachfolgenden Beschreibung eines mobilen Bearbeitungssystems gemäß einer Ausführungsform der vorliegenden Erfindung unter Bezugnahme auf die beiliegende Zeichnung deutlich. Darin ist
- Figur 1: eine perspektivische Ansicht, die ein mobiles Bearbeitungssystem gemäß einer Ausführungsform der vorliegenden Erfindung zeigt;

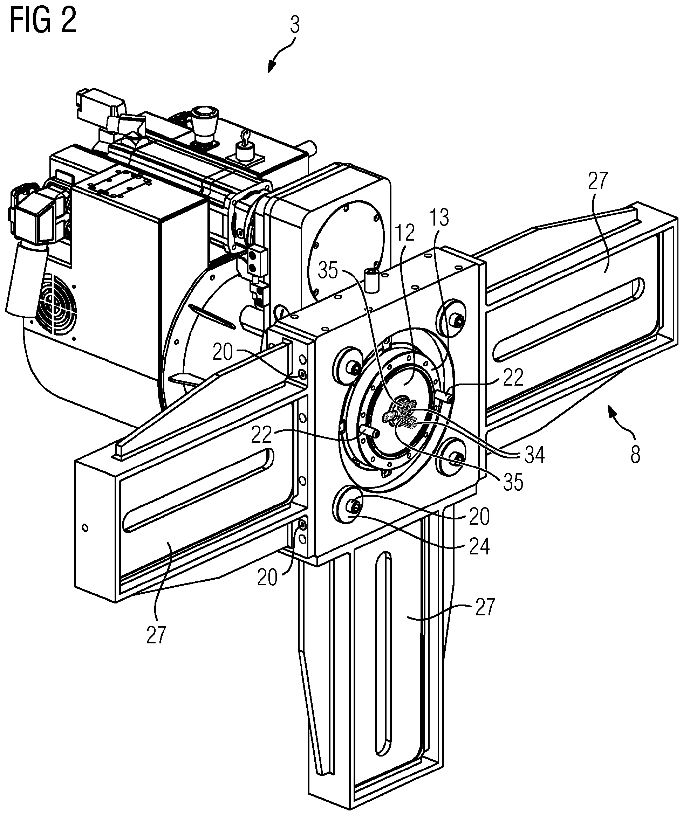

- Figur 2: eine perspektivische Ansicht eines Antriebsmoduls des in Figur 1 dargestellten Bearbeitungssystems;

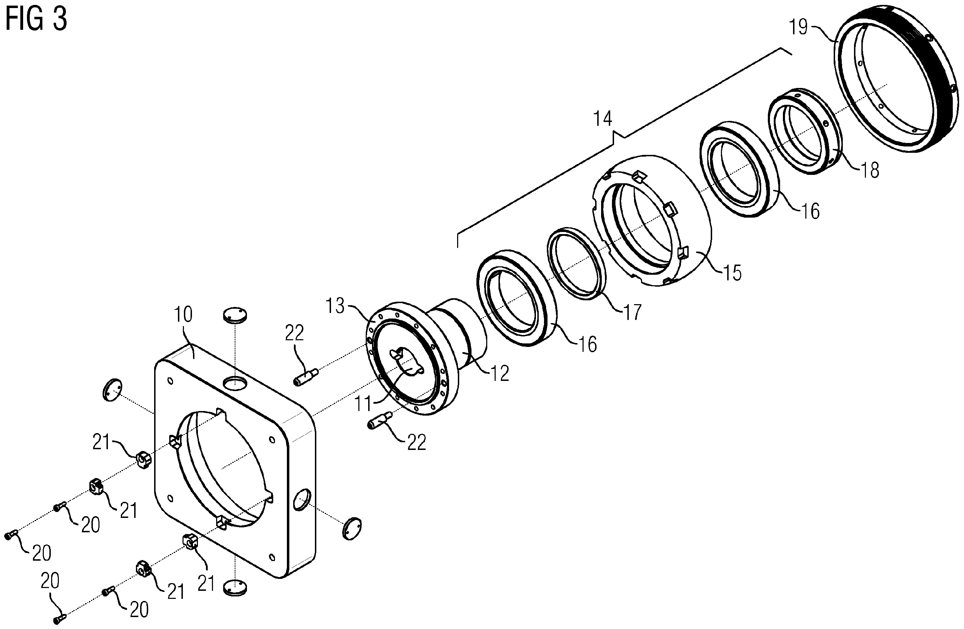

- Figur 3: eine Explosionsansicht von Komponenten des in Figur 2 dargestellten Antriebsmoduls;

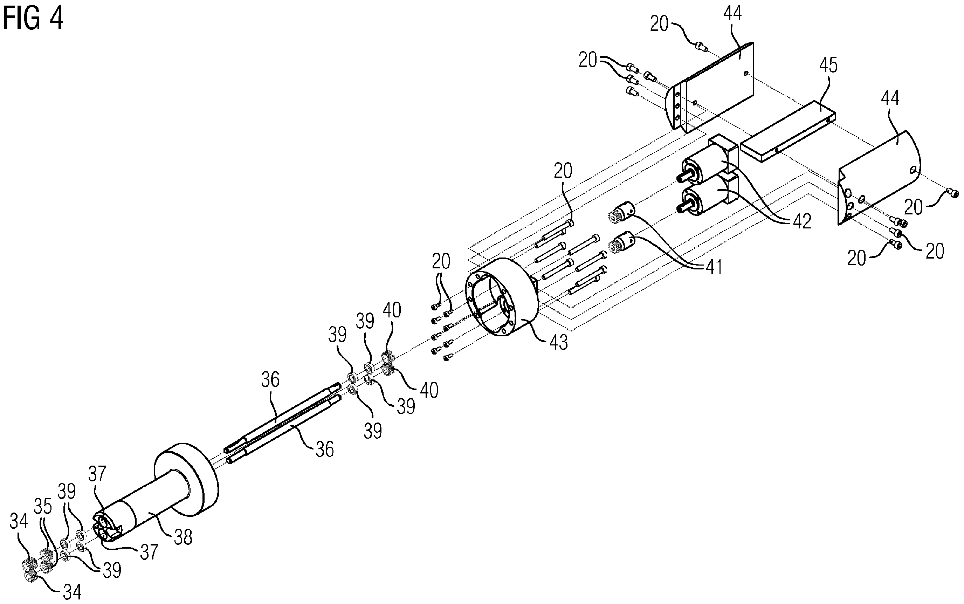

- Figur 4: eine Explosionsansicht weiterer Komponenten des in Figur 2 dargestellten Antriebsmoduls;
- Figur 5: eine perspektivische Ansicht der in Figur 4 dargestellten Komponenten im montierten Zustand;
- Figur 6: eine weitere Explosionsansicht von Komponenten des in Figur 2 dargestellten Antriebsmoduls einschließlich der in den Figuren 3 bis 5 dargestellten Anordnungen;

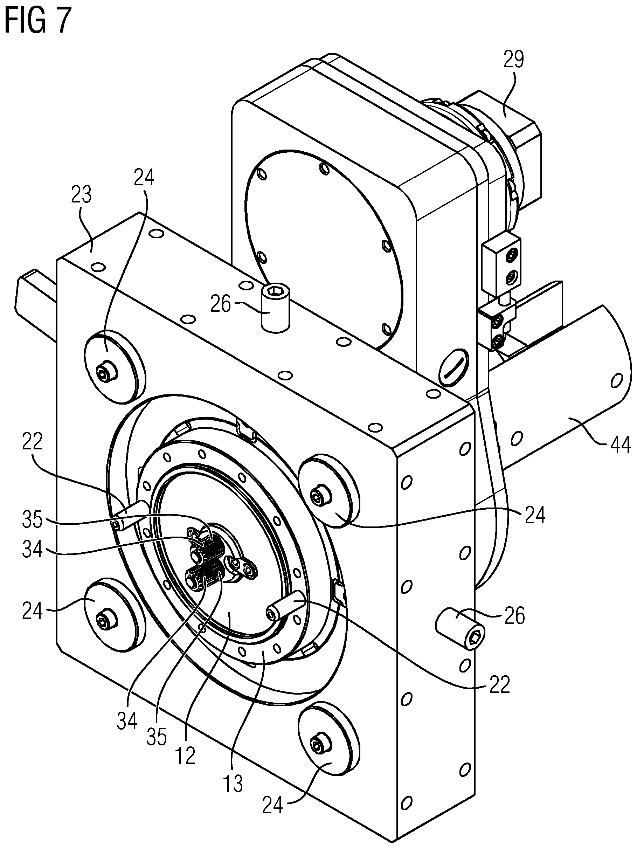

- Figur 7: eine Ansicht der in Figur 6 dargestellten Komponenten im montierten Zustand;

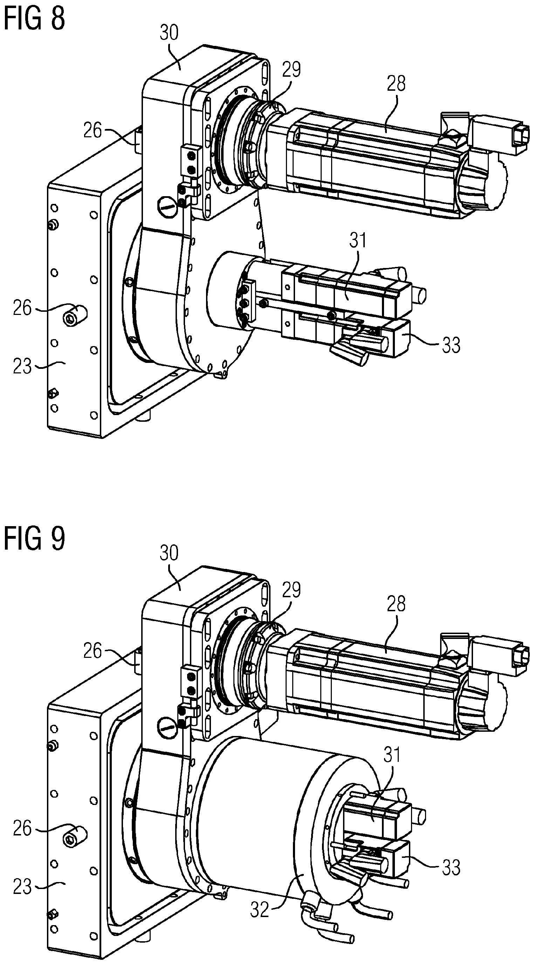

- Figur 8: eine perspektivische Ansicht der in Figur 7 dargestellten Anordnung mit montierten Motoren;
- Figur 9: eine perspektivische Ansicht der in Figur 8 dargestellten Anordnung ergänzt um eine Abdeckung und einen Schleifring;
- Figur 10: eine teilweise Schnittansicht entlang der Linie X-X in Figur 7, wobei an einem in Figur 7 gezeigten Rotationsteil eine erste Führungsstange montiert ist;

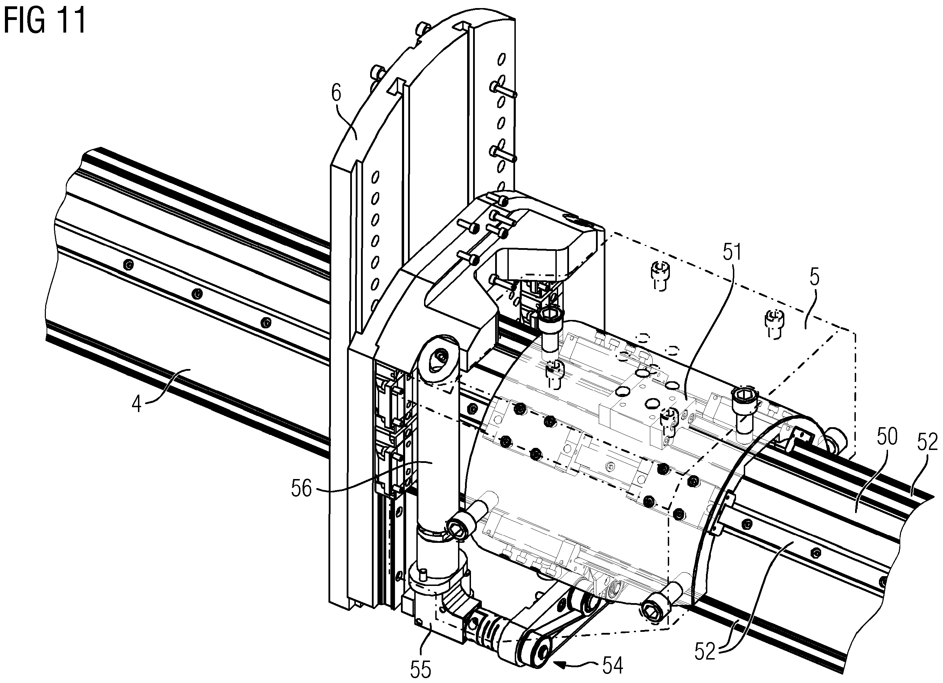

- Figur 11: eine perspektivische Draufsicht der ersten Führungsstange im Bereich eines Supports;

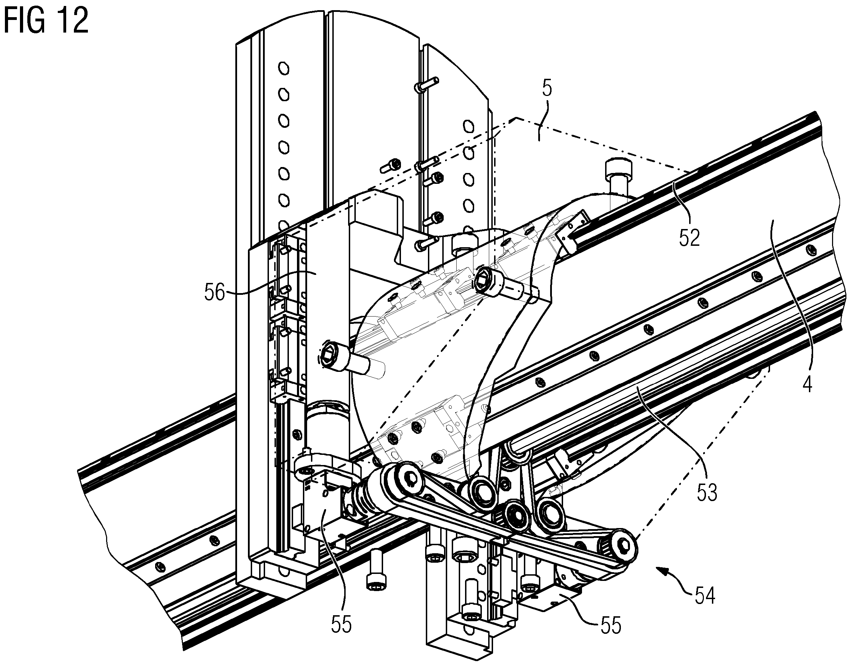

- Figur 12: eine perspektivische Unteransicht der ersten Führungsstange im Bereich des Supports;
- Figur 13: eine Ansicht analog zu Figur 10, wobei an dem Rotationsteil eine zweite Führungsstange anstelle der ersten Führungsstange montiert ist; und
- Figur 14: eine schematische perspektivische Ansicht, die das in Figur 1 dargestellte Bearbeitungssystem in einem Zustand zeigt, in dem dieses an einem spanend zu bearbeitenden Bauteil montiert ist.

Gleiche Bezugsziffern beziehen sich nachfolgend auf gleiche oder gleichartige Bauteile.

Die Figuren zeigen ein mobiles Bearbeitungssystem 1 gemäß einer Ausführungsform der vorliegenden Erfindung, das dazu dient, Innenflächen hohlzylindrischer Bauteile 2 einer spanenden Drehbearbeitung zu unterziehen. Das Bearbeitungssystem 1 ist modular aufgebaut. Es umfasst ein Antriebsmodul 3, eine lösbar mit dem Antriebsmodul 3 verbundene Führungsstange 4, die um eine C-Achse gedreht werden kann, einen an der Führungsstange 4 demontierbar gehaltenen Support 5, der entlang der Führungsstange 4 entlang einer Z-Achse bewegbar ist, einen an dem Support 5 angeordneten Werkzeughalter 6, der entlang einer senkrecht zur Z-Achse angeordneten X-Achse radial verfahrbar und zur Aufnahme eines Werkzeugs 7 ausgelegt ist, insbesondere zur Aufnahme eines Drehmeißels, eine Außenspanneinrichtung 8, die lösbar an dem Antriebsmodul 3 befestigt und dazu ausgelegt ist, das Bearbeitungssystem 1 an einer Stirnseite eines zu bearbeitenden Bauteils 2 zu befestigen, und eine Innenspanneinrichtung 9, die an der Führungsstange gelagert und dazu ausgelegt ist, das Bearbeitungssystem 1 an einer Innenfläche des zu bearbeitenden Bauteils 2 abzustützen.

Das Antriebsmodul 3 weist ein Basisteil 10, das vorliegend ein Hauptlagergehäuse bildet, und ein hohl und wellenstumpfförmig ausgebildetes, mit einer Durchgangsöffnung 11 versehenes Rotationsteil 12 auf, das sich durch das Basisteil 10 erstreckt, an diesem drehbar um die C-Achse gelagert ist und stirnseitig einen ersten Flanschbereich 13 definiert. Die Lagerung wird durch ein Lager 14 gebildet, das einen sphärischen Innenring 15 aufweist, an dem zwei Schrägkugellager 16 durch einen Abstandsring 17 getrennt voneinander gehalten und über eine Stellmutter 18 eingestellt sind. Die Fixierung des Lagers 14 an dem Basisteil 10 ist über einen sphärischen Andruckring 19 realisiert. Eine Sicherung des sphärischen Innenrings 15 gegen eine Bewegung in Umfangsrichtung erfolgt über Verdrehsicherungselemente 21, die über Befestigungsschrauben 20 an dem Basisteil 10 gehalten sind. An dem ersten Flanschbereich 13 des Rotationsteils 12 sind parallel zur C-Achse vorstehende Zentrierstifte 22 umfänglich einander gegenüberliegend befestigt, welche die ordnungsgemäße Montage der Führungsstange 4 an dem Rotationsteil 12 unterstützen, wie es nachfolgend noch näher erläutert wird. Über das Basisteil 10 ist ausgehend von der Vorderseite eine deckelartige Befestigungskonsole 23 gestülpt und an diesem unter Verwendung von Befestigungsschrauben 20 und zugeordneten Unterlegscheiben 24 fixiert, wobei der stirnseitige Bereich des Rotationsteils 12 einschließlich seines ersten Flanschbereiches 13 über eine in der Befestigungskonsole 23 ausgebildete kreisförmige Zugangsöffnung 25 zugänglich ist. An den vier paarweise einander gegenüberliegenden Seitenflächen der Befestigungskonsole 23 ist jeweils ein auswärts vorstehender Gewindestift 26 positioniert. Diese Gewindestifte 26 dienen zur Feineinstellung des gesamten Bearbeitungssystems 1 zur Drehachse eines zu bearbeitenden Bauteils 2.

Das Antriebsmodul 3 umfasst ferner einen ersten Motor 28, der drehfest mit dem Basisteil 10 verbunden ist und die Führungsstange 4 über einen ersten Antriebsstrang drehend um die C-Achse antreibt. Vorliegend weist der erste Antriebsstrang ein mit dem ersten Motor 28 verbundenes Getriebe 29 in Form eines Planetengetriebes, eine an der Getriebeantriebswelle befestigte erste Zahnriemenscheibe und eine mit einem rückseitig von dem Basisteil 10 vorstehenden Abschnitt des Rotationsteils 12 drehfest verbundene zweite Zahnriemenscheibe auf, die über einen Zahnriemen miteinander verbunden sind. Die beiden Zahnriemenscheiben sowie der Zahnriemen selbst sind in einem Gehäuse 30 aufgenommen, das an dem Basisteil 10 befestigt und mit einer Durchgangsöffnung versehen ist, die fluchtend mit der Durchgangsöffnung 11 des Rotationsteils 12 angeordnet ist. Aufgrund der Tatsache, dass die beiden Zahnriemenscheiben und der Zahnriemen einen einfachen Riementrieb bilden und die genaue Ausbildung des ersten Antriebstrangs bezogen auf die der Anmeldung zugrundeliegende Erfindung von untergeordneter Bedeutung ist, wurde vorliegend auf eine Detaildarstellung des ersten Antriebstrangs verzichtet.

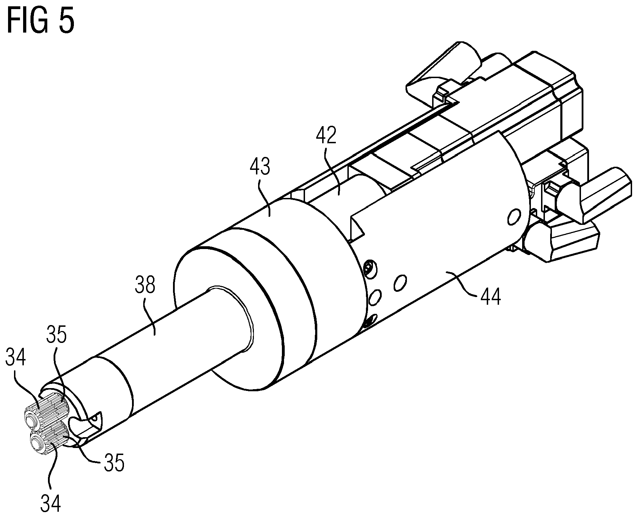

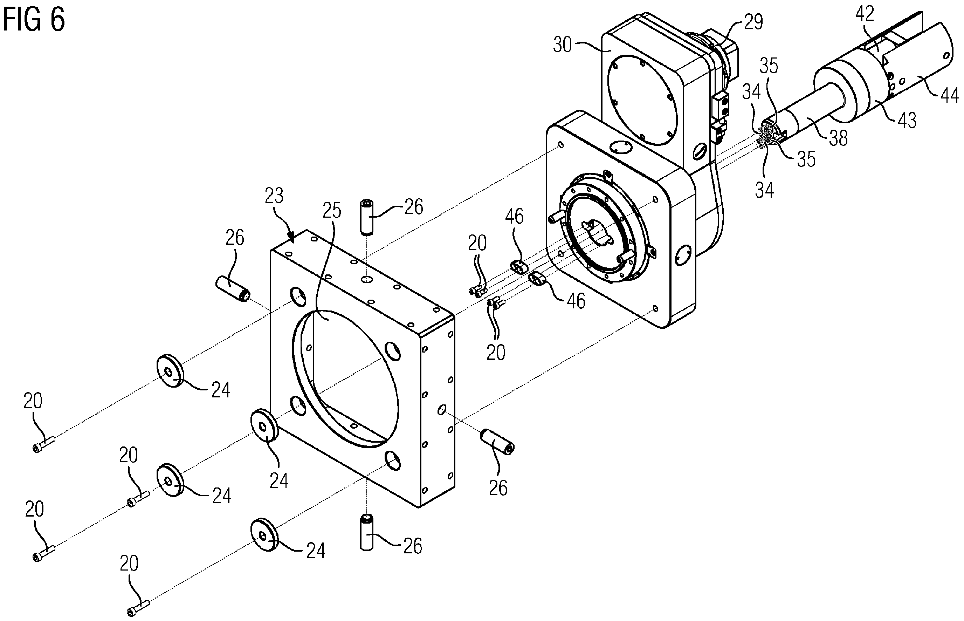

Das Antriebsmodul 3 umfasst ferner einen zweiten Motor 31, der drehfest mit dem Rotationsteil 12 verbunden ist, über einen Schleifring 32 mit Energie versorgt wird und den Support 5 über einen zweiten Antriebsstrang antreibt, sowie einen dritten Motor 33, der drehfest mit dem Rotationsteil 12 verbunden ist, ebenfalls über den Schleifring 32 mit Energie versorgt wird und den Werkzeughalter 6 über einen dritten Antriebsstrang antreibt. Auf der Seite des Antriebsmoduls 3 umfassen der zweite Antriebsstrang und der dritte Antriebsstrang jeweils zwei axial unmittelbar hintereinander angeordnete Zahnräder 34 und 35, wobei die Zahnräder 34 Führungszahnräder aus einem weicheren Material bilden, die das Anordnen der Führungsstange 4 erleichtern, wie es nachfolgend noch näher erläutert ist. Die Zahnräder 34 und 35 sind in einem zentralen Bereich nahe der C-Achse angeordnet und stehen auswärts von dem Rotationsteil 12 vor, wobei ein kürzester Abstand a zwischen den Hauptkreisdurchmessern der Zahnräder 34 der jeweiligen Antriebsstränge zwischen 15mm und 45mm beträgt. Die Zahnräder 34, 35 sind jeweils drehfest im Bereich des freien Endes einer zugeordneten Zahnradwelle 36 gehalten, wobei sich die Zahnradwellen 36 durch zugeordnete Bohrungen 37 einer Spindelantriebswelle 38 erstrecken und an dieser über entsprechende Kugellager 39 drehbar gelagert sind. Im Bereich des gegenüberliegenden freien Endes der jeweiligen Zahnradwellen 36 sind Zwischenzahnräder 40 drehfest befestigt, die mit zugeordneten Zahnradwellen 41 kämmen, die jeweils über ein Planetengetriebe 42 von dem zweiten Motor 31 einerseits und dem dritten Motor 33 andererseits angetrieben werden. An der Spindelantriebswelle ist eine die Zahnradwellen 38 aufnehmende, ringartig ausgebildete Getriebehalterung 43 mittels Befestigungsschrauben 20 befestigt, an der wiederum die beiden Planetengetriebe 42 montiert sind. Ferner sind zwei Befestigungsplatten 44 mit der Getriebehalterung 43 verschraubt, die über eine weitere Befestigungsplatte 45 miteinander verbunden sind und die Planetengetriebe 43 vor äußeren Einflüssen schützen. Die auf diese Weise erzeugte, in Figur 5 dargestellte Anordnung wird von hinten in die Durchgangsöffnung 11 des Basisteils 10 eingeschoben, siehe Figur 6, woraufhin die Spindelantriebswelle 38 über entsprechende Positionierelemente 46 und Befestigungsschrauben 20 drehfest mit dem Rotationsteil 12 verbunden wird.

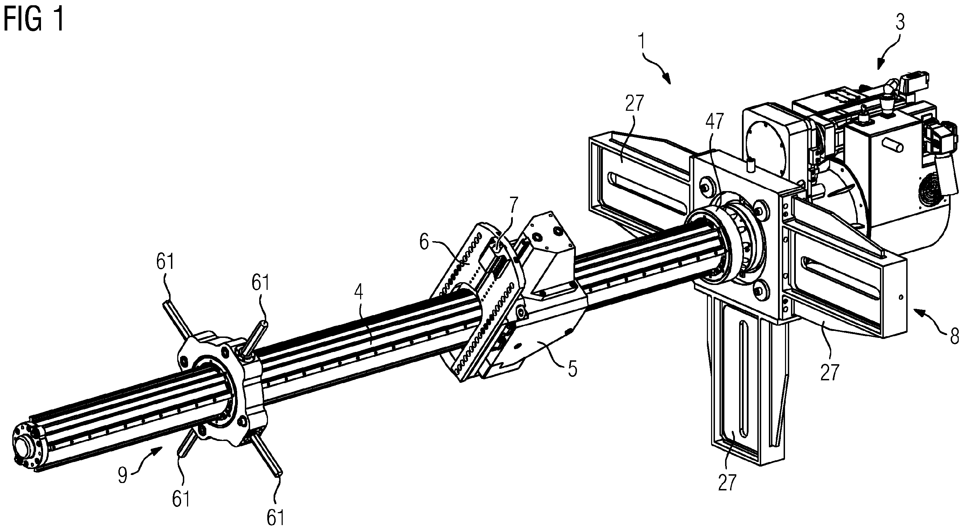

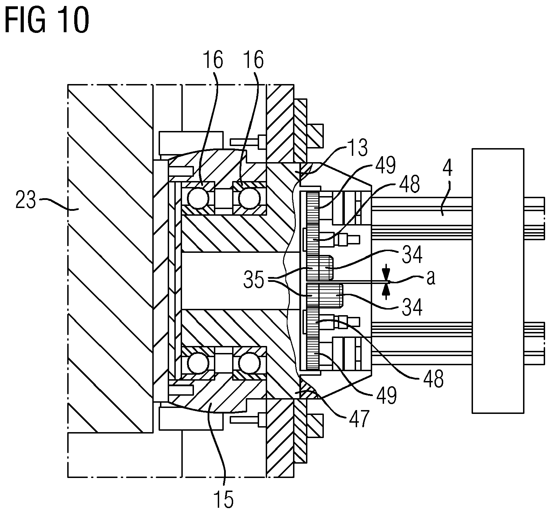

Die Führungsstange 4 umfasst an ihrem dem Rotationsteil 12 zugewandten freien Ende einen zweiten Flanschbereich, der über entsprechende Befestigungsschrauben 20 lösbar mit dem ersten Flanschbereich des Rotationsteils 12 verbunden ist, wie es insbesondere in den Figuren 1 und 10 dargestellt ist. Innerhalb des zweiten Flanschbereiches 47 sind an der Führungsstange 4 weitere Zahnräder 48, 49 angeordnet, die mit den von dem Rotationsteil 12 axial auswärts vorstehenden Zahnrädern 34 bzw. 35 angetrieben werden und den zweiten bzw. dritten Antriebsstrang auf der Seite der Führungsstange 4 fortsetzen. Die weiteren Zahnräder 48 und 49 des zweiten Antriebsstrangs betätigen vorliegend eine Gewindespindel 50, an der eine mit dem Support 5 fest verbundene Kugelumlaufmutter 51 derart gehalten ist, dass der an der Führungsstange 4 entlang entsprechender Führungen 52 geführte Support 5 durch entsprechende Drehung der Gewindespindel 50 in Z-Richtung wahlweise vor- oder zurückbewegt wird. Die weiteren Zahnräder 48 und 49 des dritten Antriebsstrangs drehen eine sich parallel zur C-Achse erstreckende Antriebsstange 53 mit mehreckigem Querschnitt, die an der Führungsstange 4 gelagert ist. Die Antriebsstange 53 treibt wiederum einen Zahnriementrieb 54 des Supports 5 an, der dann unter Zwischenschaltung von Winkelgetrieben 55 zwei sich in X-Richtung erstreckende Kugelumlaufspindeln 56 (hier verdeckt durch das Führungsrohr) des Supports 5 synchron dreht, an denen der Werkzeughalter 6 gehalten ist. Entsprechend kann der Werkzeughalter 6 mit dem daran gehaltenen Werkzeug in X-Richtung wahlweise vor- oder zurückbewegt werden.

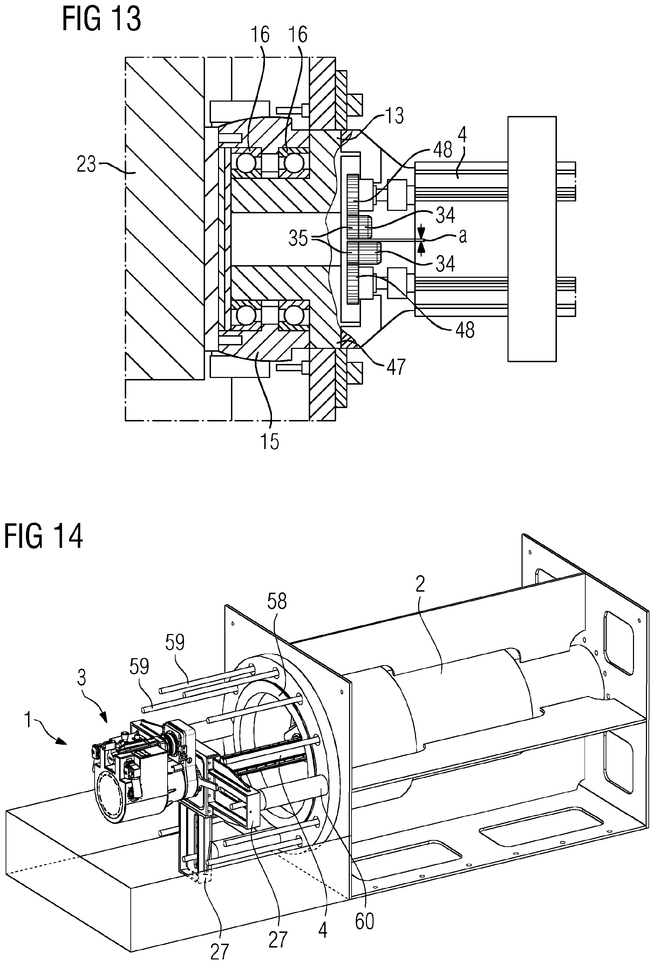

Figur 13 zeigt eine Anordnung analog zu Figur 10, wobei an dem ersten Flanschbereich 13 des Rotationsteils 12 ein zweiter Flanschbereich 47 einer Führungsstange 4 befestigt ist, die sich hinsichtlich ihres Außendurchmessers von der in Figur 10 dargestellten Führungsstange 4 unterscheidet. Diese Durchmesserdifferenz der Führungsstangen 4 wird durch geeignete Wahl des innerhalb des zweiten Flanschbereiches 47 der Führungsstange 4 angeordneten weiteren Zahnrads 48 in einfacher Art und Weise ausgeglichen.

Figur 14 zeigt das Bearbeitungssystem 1 in einem Zustand, in dem dieses an einem zu bearbeitenden Bauteil 2 befestigt ist, bei dem es sich vorliegend um ein Ventil handelt. Das Bearbeitungssystem 1 ist einerseits über die Außenspanneinrichtung 8 außen an dem Bauteil 2 gehalten. Hierzu sind im Bereich eines Befestigungsflansches 58 des Bauteils 2 Gewindestangen 59 in bereits vorhandene Gewindebohrungen geschraubt, die an den Spannarmen 27 der Außenspanneinrichtung 8 befestigt sind, wobei über Abstandshülsen 60, die über die Gewindestangen 59 geschoben sind, ein definierter Abstand zwischen dem Bauteil 2 und der Außenspanneinrichtung 8 definiert ist, der während der Einrichtung des Bearbeitungssystems 1 und während der Bearbeitung selbst einen guten Einblick in das Bauteil 2 ermöglicht. Ferner stützt sich das Bearbeitungssystem 1 über die Innenspanneinrichtung 9 an der Innenwandung des Bauteils 2 ab, was in Figur 14 allerdings nicht zu erkennen ist. Hierzu werden radial auswärts von der Innenspanneinrichtung 9 vorstehende Spannstangen 61 gegen die Innenwandung des Bauteils 2 gedrückt.

Ein wesentlicher Vorteil des Aufbaus des zuvor beschriebenen Bearbeitungssystems 1 besteht insbesondere darin, dass der zweite und der dritte Antriebsstrang dank der Anordnung der von dem Rotationsteil 12 axial vorstehenden Zahnräder 34 und 35 in einem zentralen Bereich nahe der C-Achse einen vergleichsweise einfachen Aufbau aufweisen können. Zudem ist es aufgrund dieser Anordnung problemlos möglich, wahlweise verschiedene Führungsstangen 4 mit unterschiedlichen Außendurchmessern an dem Rotationsteil zu befestigen, da lediglich geeignete weitere Zahnräder 48, 49 an den Führungsstangen 4 im Bereich des jeweiligen zweiten Flanschbereiches 47 anzuordnen sind.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Mobiles Bearbeitungssystem (1) zur spanenden Drehbearbeitung von Innenflächen hohlzylindrischer Bauteile (2), insbesondere zur Bearbeitung von Ventilsitzen, umfassend
- ein Basisteil (10),
- ein hohl ausgebildetes Rotationsteil (12), das sich durch das Basisteil (10) erstreckt, an diesem drehbar um eine C-Achse des Bearbeitungssystems (1) gelagert ist und stirnseitig einen ersten Flanschbereich (13) definiert,
- eine Führungsstange (4),
- einen ersten Motor (28), der drehfest mit dem Basisteil (10) verbunden ist und die Führungsstange (4) über einen ersten Antriebsstrang drehend um die C-Achse antreibt,
- einen Support (5), der an der Führungsstange (4) in Richtung der Z-Achse vor und zurück bewegbar gehalten ist,
- einen zweiten Motor (31),
- einen Werkzeughalter (6), der an dem Support (5) in Richtung einer sich senkrecht zur Z-Achse erstreckenden X-Achse des Bearbeitungssystems (1) bewegbar gehalten ist,
- eine Außenspanneinrichtung (8), die drehfest mit dem Basisteil (10) verbunden und dazu ausgelegt ist, das Basisteil (10) mittig an einer Stirnseite eines zu bearbeitenden Bauteils (2) zu befestigen, und
- eine Innenspanneinrichtung (9), die an der Führungsstange (4) gelagert und dazu ausgelegt ist, das Bearbeitungssystem (1) an einer Innfläche des zu bearbeitenden Bauteils (2) abzustützen, **dadurch gekennzeichnet dass**
- die Führungsstange an ihrer freien Enden einen zweiten Flanschbereich aufweist, der mit der ersten Flanschbereich des Rotationsteils drehfest verbunden ist, und die eine sich parallel zur C-Achse erstreckende Z-Achse des Bearbeitungssystems definiert,
- der zweite Motor drehfest mit dem Rotationsteil verbunden ist, über einen Schleifring mit Energie versorgt wird und den Support über einen zweiten Antriebsstrang antreibt,
- das Bearbeitungssystem einen dritten Motor umfasst, der drehfest mit dem Rotationsteil verbunden ist, über einen oder den Schleifring mit Energie versorgt wird und den Werkzeughalter über einen zweiten Antriebsstrang antreibt.

2. Bearbeitungssystem (1) nach Anspruch 1,
**dadurch gekennzeichnet, dass**
der zweite Antriebsstrang zumindest ein Zahnrad (34, 35) aufweist, das drehfest im Endbereich einer sich durch das Rotationsteil (12) erstreckenden, von dem zweiten Motor (31) angetriebenen ersten Zahnradwelle (41) gehalten ist, dass der dritte Antriebsstrang zumindest ein Zahnrad (34, 35) aufweist, das drehfest im Endbereich einer sich durch das Rotationsteil (12) erstreckenden, von dem dritten Motor (33) angetriebenen zweiten Zahnradwelle (41) gehalten ist, dass die Zahnräder (34, 35) in einem zentralen Bereich nahe der C-Achse angeordnet sind und auswärts von dem Rotationsteil (12) vorstehen,
wobei ein kürzester Abstand (a) zwischen den Kopfkreisdurchmessern der beiden Zahnräder (34; 35) insbesondere 15mm bis 45mm beträgt, und
dass der zweite und der dritte Antriebsstrang jeweils zumindest ein weiteres Zahnrad (48, 49) aufweisen, das drehbar an der Führungsstange (4) innerhalb des zweiten Flanschbereiches (47) angeordnet ist und mit dem zugeordneten, von dem Rotationsteil (12) auswärts vorstehenden Zahnrad (34, 35) kämmt.

3. Bearbeitungssystem (1) nach Anspruch 2,
**dadurch gekennzeichnet, dass**
der zweite Antriebsstrang und der dritte Antriebsstrang jeweils ein Getriebe aufweisen,
insbesondere ein Planetengetriebe (42),
das zwischen dem jeweiligen Motor (31, 33) und dem zugehörigen, auswärts von dem Rotationsteil (12) vorstehenden Zahnrad (34, 35) angeordnet ist.

4. Bearbeitungssystem (1) nach einem der vorhergehenden Ansprüche,
**dadurch gekennzeichnet, dass**
mehrere Führungsstangen (4) unterschiedlichen Durchmessers mit zugeordneten Supports (5), Werkzeughaltern (6) und Innenspanneinrichtungen (9) vorgesehen sind, die jeweils einen zweiten Flanschbereich (47) definieren, der zur Befestigung an dem ersten Flanschbereich (13) des Rotationsteils (12) ausgelegt ist.

5. Bearbeitungssystem (1) nach einem der vorhergehenden Ansprüche,
**dadurch gekennzeichnet, dass**
das Basisteil (10), das Rotationsteil (12) und die drei Motoren (28, 31, 33) in einem einzelnen Antriebsmodul (3) zusammengefasst sind.

## Claims

1. Mobile machining system (1) for turning machining of inner faces of hollow-cylindrical components (2), in particular for machining of valve seats, comprising
- a base part (10),
- a rotation part (12) of hollow configuration which extends through the base part (10), is mounted on the latter such that it can be rotated about a C-axis of the machining system (1), and defines a first flange region (13) on the end side,
- a guide rod (4),
- a first motor (28) which is connected fixedly to the base part (10) so as to rotate with it, and drives the guide rod (4) via a first drive train so as to rotate about the C-axis,
- a support (5) which is held on the guide rod (4) such that it can be moved to and fro in the direction of the Z-axis,
- a second motor (31),
- a tool holder (6) which is held on the support (5) such that it can be moved in the direction of an X-axis of the machining system (1), which X-axis extends perpendicularly with respect to the Z-axis,
- an outer clamping device (8) which is connected fixedly to the base part (10) so as to rotate with it, and is designed to fasten the base part (10) centrally to an end side of a component (2) to be machined, and
- an inner clamping device (9) which is mounted on the guide rod (4) and is designed to support the machining system (1) on an inner face of the component (2) to be machined, **characterized in that**
- the guide rod has, at its free ends, a second flange region which is connected fixedly to the first flange region of the rotation part so as to rotate with it, and which defines a Z-axis of the machining system, which Z-axis extends parallel to the C-axis,
- the second motor is connected fixedly to the rotation part so as to rotate with it, is supplied with energy via a slip ring and drives the support via a second drive train,
- the machining system comprises a third motor, which is connected fixedly to the rotation part so as to rotate with it, is supplied with energy via a or the slip ring, and drives the tool holder via a second drive train.

2. Machining system (1) according to Claim 1,
**characterized in that**
the second drive train has at least one gearwheel (34, 35) which is held fixedly for conjoint rotation in the end region of a first gear wheel shaft (41) which extends through the rotation part (12) and is driven by the second motor (31), **in that** the third drive train has at least one gearwheel (34, 35) which is held fixedly for conjoint rotation in the end region of a second gear wheel shaft (41) which extends through the rotation part (12) and is driven by the third motor (33), **in that** the gearwheels (34, 35) are arranged in a central region close to the C-axis and project outwards from the rotation part (12),
a shortest spacing (a) between the tip circle diameters of the two gearwheels (34; 35) being, in particular, from 15 mm to 45 mm, and
**in that** the second and the third drive train in each case have at least one further gearwheel (48, 49) which is arranged rotatably on the guide rod (4) within the second flange region (47) and meshes with the associated gearwheel (34, 35) which projects outwards from the rotation part (12).

3. Machining system (1) according to Claim 2,
**characterized in that**
the second drive train and the third drive train in each case have a transmission,
in particular a planetary transmission (42),
which is arranged between the respective motor (31, 33) and the associated gearwheel (34, 35) which projects outwards from the rotation part (12).

4. Machining system (1) according to one of the preceding claims,
**characterized in that**
a plurality of guide rods (4) of different diameters with associated supports (5), tool holders (6) and inner clamping devices (9) are provided which in each case define a second flange region (47) which is designed for fastening to the first flange region (13) of the rotation part (12).

5. Machining system (1) according to one of the preceding claims,
**characterized in that**
the base part (10), the rotation part (12) and the three motors (28, 31, 33) are combined in a single drive module (3).

## Revendications

1. Système (1) mobile d'usinage pour le tournage sans copeaux de surfaces intérieures de pièces (2) cylindriques creuses, notamment pour l'usinage de sièges de soupape, comprenant
- une partie (10) de base,
- une partie (12) de révolution de constitution creuse, qui passe dans la partie (10) de base, qui est montée tournante sur celle-ci autour d'un axe C du système (1) d'usinage et qui définit du côté frontal une première région (13) de bride,
- une barre (4) de guidage,
- un premier moteur (28), qui est solidaire en rotation de la partie (10) de base et qui entraîne la barre (4) de guidage en rotation autour de l'axe C par une première chaîne cinématique,
- un support (5), qui est maintenu mobile en aller et retour dans la direction de l'axe Z sur la barre (4) de guidage,
- un deuxième moteur (31),
- un porte-outil (6), qui, sur le support (5), est maintenu mobile dans la direction d'un axe X du système (1) d'usinage, s'étendant perpendiculairement à l'axe Z,
- un dispositif (8) de blocage extérieur, solidaire de la partie (10) de base et conçu pour fixer la partie (10) de base au milieu à un côté frontal d'une pièce (2) à usiner, et
- un dispositif (9) de blocage intérieur, qui est monté sur la barre (4) de guidage et qui est conçu pour appuyer le système (1) d'usinage à une surface intérieure de la pièce (2) à usiner, **caractérisé en ce que**
- la barre de guidage a, à ses extrémités libres, une deuxième région de bride, qui est solidaire en rotation de la première région de bride de la partie de révolution et qui définit un axe Z du système d'usinage s'étendant parallèlement à l'axe C,
- le deuxième moteur est solidaire en rotation de la partie de révolution, est alimenté en énergie par une bague collectrice et entraîne le support par une deuxième chaîne cinématique,
- le système d'usinage comprend un troisième moteur, qui est solidaire en rotation de la partie de révolution, qui est alimenté en énergie par une ou par la bague collectrice et qui entraîne le porte-outil par une deuxième chaîne cinématique.

2. Système (1) d'usinage suivant la revendication 1, **caractérisé en ce que**
la deuxième chaîne cinématique a au moins une roue (34, 35) dentée, qui est maintenue solidaire en rotation dans la région d'extrémité d'un premier arbre (41) de roue dentée, s'étendant dans la partie (12) de révolution et entraînée par le deuxième moteur (31), **en ce que** la troisième chaîne cinématique a au moins une roue (34, 35) dentée, qui est maintenue solidaire en rotation dans la région d'extrémité d'un deuxième arbre (41) de roue dentée, s'étendant dans la partie (12) de révolution et entraînée par le troisième moteur (33), **en ce que** les roues (34, 35) dentées sont disposées dans une région centrale à proximité de l'axe C et font saillie vers l'extérieur de la partie (12) de révolution,
dans lequel une distance (a) la plus courte entre les diamètres de cercle de tête des deux roues (34, 35) dentée va notamment de 15 mm à 45 mm, et
**en ce que** la deuxième et la troisième chaînes cinématiques ont chacune au moins une autre roue (48, 49) dentée, qui est montée tournante sur la barre (4) de guidage à l'intérieur de la deuxième région (47) de bride et engrène avec la roue (34, 35) dentée associée, en saillie vers l'extérieur de la partie (12) de révolution.

3. Système (1) d'usinage suivant la revendication 2, **caractérisé en ce que**
la deuxième chaîne cinématique et la troisième chaîne cinématique ont chacune un engrenage,
notamment un engrenage (42) épicycloïdal,
qui est monté entre le moteur (31, 33) respectif et la roue (34, 35) dentée associée, en saillie vers l'extérieur de la partie (12) de révolution.

4. Système (1) d'usinage suivant l'une des revendications précédentes,
**caractérisé en ce qu'**
il est prévu plusieurs barres (4) de guidage de diamètres différents à supports (5), porte-outils (6) et dispositifs (9) de blocage intérieur associés, qui définissent chacune une deuxième région (47) de bride, conçue pour la fixation à la première région (13) de bride de la partie (12) de révolution.

5. Système (1) d'usinage suivant l'une des revendications précédentes,
**caractérisé en ce que**
la partie (10) de base, la partie (12) de révolution et les trois moteurs (28, 31, 33) sont rassemblés en un module (3) d'entraînement individuel.
